# EUROPEAN PATENT APPLICATION

(11) **EP 4 270 122 A1**
(43) Date of publication of application: **01.11.2023**
(21) Application number: 21909739.1
(22) Date of filing: 03.03.2021
(51) Int. Cl.: G05B 19/05, G06F 9/48

(54) **CONTROL DEVICE, CONTROL METHOD, AND CONTROL PROGRAM**

(30) Priority: 23.12.2020 JP 2020214052
(71) Applicant: OMRON Corporation, Kyoto 600-8530 (JP)
(72) Inventor: NISHIGAKI, Koji, Kyoto-shi, Kyoto 600-8530 (JP)
(74) Representative: Becker, Eberhard
(86) International application number: PCT/JP2021/008037
(87) International publication number: WO 2022/137577

(57) **Abstract**

Provided is a control device which can reliably execute a fixed cycle task within a control cycle. A schedule program (212) executed in the control device (1): estimates an execution time of a fixed cycle program (230) as a fixed cycle task that is to be executed in a next control cycle, which is a following control cycle, in a control cycle under execution in which a prescribed cycle program is executed; and sets an execution time of an information processing program (235) as an information processing task that is executed in the control cycle under execution in response to the length of the estimated execution time as the estimation result.

## Description

### Technical Field

The invention relates to scheduling of the execution of a fixed cycle program and an information processing program in a control device used for controlling an operation of a machine or an apparatus.

### Related Art

The control on the operation of a machine, an apparatus, etc., may include motion control for controlling motor movement. In such motion control, a programmable controller (referred to as "PLC" in the following) which executes, by using one CPU, a motion computation program as well as sequence computation is typically known. The motion computation program periodically outputs command values to a motor driver driving a motor.
In a real-time system such as PLC, a fixed cycle task that needs to be executed periodically is executed in each control cycle. Therefore, it is necessary to accurately calculate the time of executing the fixed cycle task, and various techniques have been disclosed.

### Citation List

### Patent Literature

[Patent Document 1] Japanese Laid-open No. 2012-194663
[Patent Document 2] Japanese Laid-open No. 2012-194669
[Patent Document 3] Japanese Laid-open No. 2012-194671

### SUMMARY OF INVENTION

### Technical Problem

Recently, high-speed CPUs and real-time OS have been used in PLCs, and a greater variety of processes can be executed. Thus, a technique which executes, in each control cycle, a sophisticated information processing task that needs not be executed periodically in addition to the fixed cycle task in the predetermined control cycle is considered. By executing the information processing task in the control cycle under execution in the control cycle, the high-speed CPU can be effectively utilized.

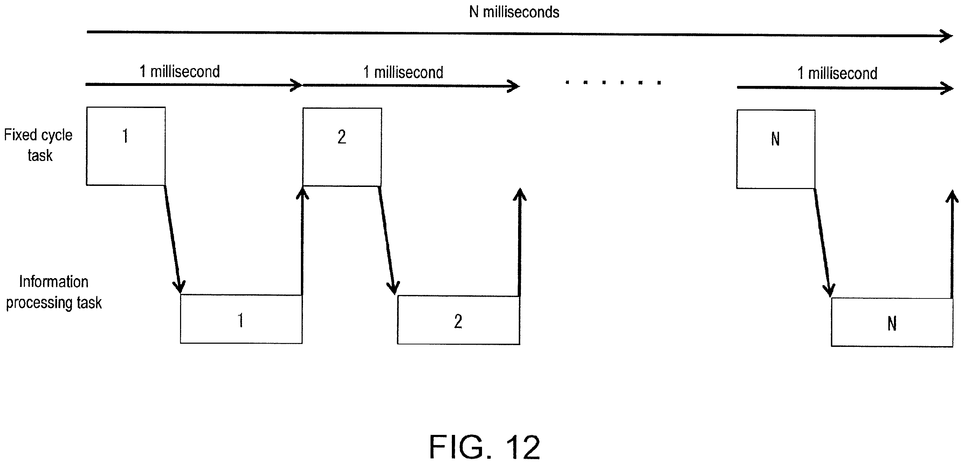

FIG. 12 illustrates a time chart of a case of executing the fixed cycle task and an information processing task with a priority lower than the fixed cycle task.

As shown in FIG. 12, a control device 1 repetitively executes fixed cycle tasks 1, 2, ..., N of the same contents at a predetermined control cycle, such as a control cycle of one millisecond. The fixed cycle task is a required task with a real-time property, and needs to be reliably executed at the predetermined control cycle (one millisecond in the current case). In addition, the control device 1 executes an information processing task (information processing tasks 1, 2, ..., N) in the control cycle under execution. Here, the information processing task is assumed to be a process which does not necessarily have to be executed in the control cycle. Therefore, by executing the information processing task in a non-execution period of the fixed cycle task in the control cycle, resources, such as the CPU, can be effectively utilized.

However, unlike a system that does not use an OS such a hardware component or a microcomputer, the time required for executing a task is uncertain in a system that uses a CPU or an OS. Accordingly, when a sophisticated information processing task that causes a load to the CPU is carried out in the control cycle under execution, the predetermined fixed cycle task scheduled to be executed in the next control cycle is affected by the information processing task, and the execution time of the fixed cycle task increases. For example, due to execution of the information processing task, information such as codes, parameters, etc., relating to the fixed cycle task and stored in a cache, etc., of the CPU is overwritten. As a result, it may become necessary to reload a portion of the program or the parameters, and the execution time of the fixed cycle task may be increased.

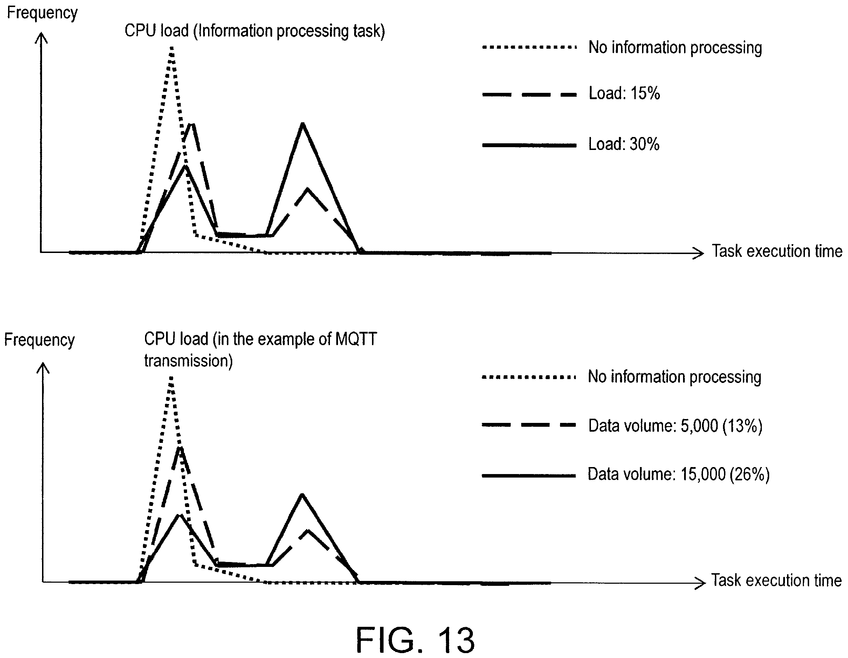

FIG. 13 is a diagram illustrating a probability distribution of the execution time of the fixed cycle task in accordance with the amount of load on the CPU of the control device 1. As shown in the upper graph of FIG. 13, in the case where the information processing task is executed and a load of 15% is caused to the CPU, the fixed cycle task execution time is distributed in a trend where the execution time of the fixed cycle task is increased, compared with the case of not executing the information processing task in addition to the fixed cycle task. In addition, the execution time of of the fixed cycle task is also increased to the maximum. Furthermore, in the case where an information processing task with a high load caused to the CPU is executed, and a load of 30% is caused to the CPU, the execution time of the fixed cycle task is distributed in a further increasing direction. The lower graph of FIG. 13 illustrates an example of a case of executing transmission of message queueing telemetry transport (MQTT), as a specific example of the information processing task In the example, the load of the CPU becomes 13% in the case of transmitting an MQTT with a data amount of 5000, and the load of the CPU becomes 26% in the case of transmitting an MQTT with a data amount of 15000. As shown in the same graph, it is known that a tendency same as the contents described in the upper graph of FIG. 13 is found in the case of transmitting MQTT.

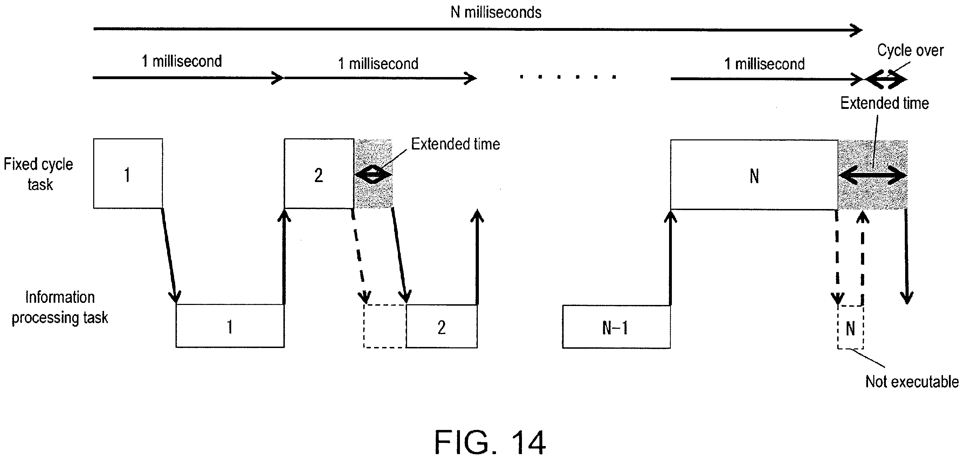

As a result of executing the information processing task together with the fixed cycle task, an issue as shown in FIG. 14 is generated. For example, under the influence of executing the information processing task (N-1) in the control cycle under execution, the execution time of the fixed cycle task N to be executed in the next control cycle is increased, and the processing of the fixed cycle task N cannot be completed within the next control cycle.

An objective of the invention is to provide a control device that reliably realizes execution of a fixed cycle task even in the case of executing both of a fixed cycle task and an information processing task in a predetermined control cycle.

### Solution to Problem

In order to solve the above issues, an aspect of the invention provides a control device for controlling a control target apparatus connected via a network. The control device includes: a microprocessor and a storage unit. The storage unit includes: a fixed cycle program, causing the microprocessor to execute a fixed cycle task required to be executed in a predetermined control cycle; an information processing program, causing the microprocessor to execute an information processing task with a priority lower than the fixed cycle task; and a scheduler program, causing the microprocessor to execute a schedule setting process of the fixed cycle program and the information processing program executed in the control cycle. The scheduler program estimates an execution time of the fixed cycle program scheduled to be executed in a next control cycle, which is a following control cycle, in the control cycle under execution, which is the control cycle in which the predetermined fixed cycle program is executed, and sets the execution time of the information processing program executed in the control cycle under execution in accordance with a length of an estimated execution time as an estimation result. According to the configuration, firstly, the execution time of the fixed cycle program scheduled to be executed in the next control cycle is estimated. In addition, in accordance with the length of the estimated execution time, the execution time of the information processing program to be executed in the control cycle under execution is set. Accordingly, it is possible to prevent a situation in which the execution time of the fixed cycle program becomes excessively long and the fixed cycle task is not sufficiently executed in the next control cycle.

In order to solve the above issues, an aspect of the invention provides a control method of a control device for controlling a control target apparatus connected via a network. The control method includes: a fixed cycle program execution step of causing a microprocessor to execute a fixed cycle task required to be executed in a predetermined control cycle; an information processing program execution step of causing the microprocessor to execute an information processing task with a priority lower than the fixed cycle task; and a scheduler program execution step of causing the microprocessor to execute a schedule setting process of the fixed cycle program and the information processing program executed in the control cycle. In the scheduler program execution step, an execution time of the fixed cycle program scheduled to be executed in a next control cycle, which is a following control cycle, is estimated in the control cycle under execution, which is the control cycle in which the predetermined fixed cycle program is executed, and the execution time of the information processing program executed in the control cycle under execution is set in accordance with a length of an estimated execution time as an estimation result.

According to the configuration, effects same as those of the control device can be achieved.

### Effects of Invention

According to an aspect of the invention, firstly, the execution time of the fixed cycle program scheduled to be executed in the next control cycle is estimated. In addition, in accordance with the length of the estimated execution time, the execution time of the information processing program to be executed in the control cycle under execution is set. Accordingly, it is possible to prevent a situation in which the execution time of the fixed cycle program becomes excessively long and the fixed cycle task is not sufficiently executed in the next control cycle.

### BRIEF DESCRIPTION OF DRAWINGS

FIG. 1 is a diagram illustrating a system configuration of a control device according to an embodiment of the invention.
FIG. 2 is a diagram illustrating a hardware configuration of a CPU unit.
FIG. 3 is a schematic diagram illustrating a software configuration executed by the CPU unit according to an embodiment of the invention.
FIG. 4 is a time chart of a process executed in a control device according to Embodiment 1 of the invention.
FIG. 5 is a flowchart illustrating a flow of processes executed in the control device according to Embodiment 1 of the invention.
FIG. 6 is a time chart of processes executed in a control device according to Embodiment 2 of the invention.
FIG. 7 is a flowchart illustrating a flow of processes executed in the control device according to Embodiment 2 of the invention.
FIG. 8 is a time chart of processes executed in a control device according to Embodiment 3 of the invention.
FIG. 9 is a flowchart illustrating a flow of processes executed in the control device according to Embodiment 3 of the invention.
FIG. 10 is a time chart of processes executed in a control device according to Embodiment 4 of the invention.
FIG. 11 is a flowchart illustrating a flow of processes executed in the control device according to Embodiment 4 of the invention.
FIG. 12 is a time chart for a control device executing both of a fixed cycle task and an information processing task.
FIG. 13 is a graph illustrating a relationship between a load amount relating to a CPU and an execution time of a fixed cycle task in the control device shown in FIG. 12.
FIG. 14 is a time chart for a control device executing both of a fixed cycle task and an information processing task.

### DESCRIPTION OF EMBODIMENTS

In the following, the embodiments of the invention are described.

### <System configuration>

A control device according to the embodiment controls a control target, such as a machine or an apparatus. The control device according to the embodiment includes a CPU unit as a component thereof. The CPU unit includes a microprocessor, a storage means including a main memory of the microprocessor, and a communication circuit. The CPU unit of the control device according to the embodiment is configured to control the control target by repetitively transmitting output data, receiving input data, and executing a control program generating output data by using input data.

The storage means is used to store the control program and a system program controlling execution of the control program and input/output of the input/output data. The microprocessor executes the system program and the control program stored in the storage means.

The communication circuit transmits the output data and receives the input data. As will be described in the following, the control device according to the embodiment is provided with, as communication circuits, a first communication circuit performing transmission of the output data and reception of the input data through a control device system bus and a second communication circuit performing transmission of the output data and reception of the input data through a field network.

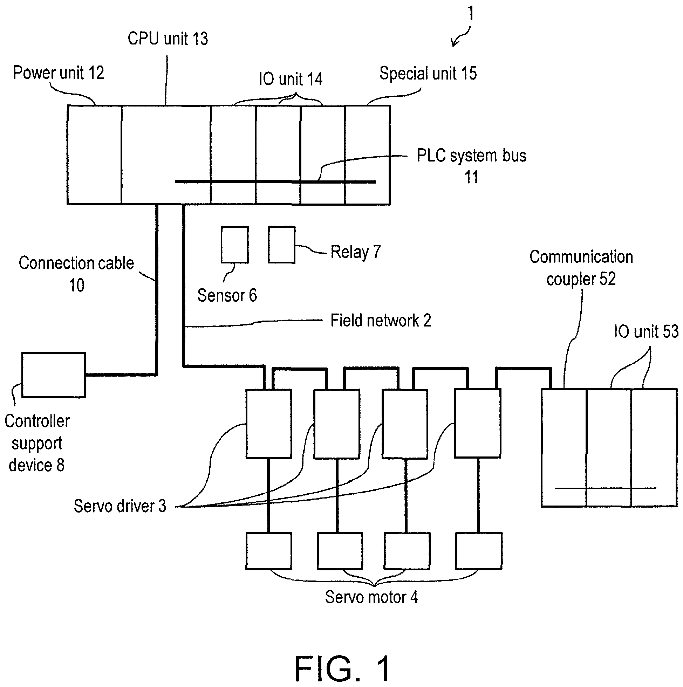

Firstly, a system configuration of a control device 1 according to the embodiment is described with reference to FIG. 1. The figure is a schematic view illustrating a schematic configuration of a control device system according to an embodiment of the invention. Referring to FIG. 1, the control device system includes the control device 1 and various control target apparatuses, i.e., a servo motor driver 3 and a remote IO terminal 5 connected with the control device 1 via a field network 2, and a sensor 6 and a relay 7 that are field apparatuses. In addition, a controller support device 8 is connected to the control device 1 via a connection cable 10, etc.

The control device 1 includes a CPU unit 13 that executes a main computational process, one or more IO units 14, and a special unit 15. The units are configured to be able to exchange data with each other via the control device system bus 11. In addition, power of a suitable voltage is supplied to the units by a power unit 12. The respective units configured as the control device 1 are provided by the manufacturer of the control device. Therefore, the control device system bus 11 is usually independently developed and used by each control device manufacturer. Comparatively, as will be described later, the standards of the field network 2 are often open to the public so that products of different manufacturers can be connected to each other.

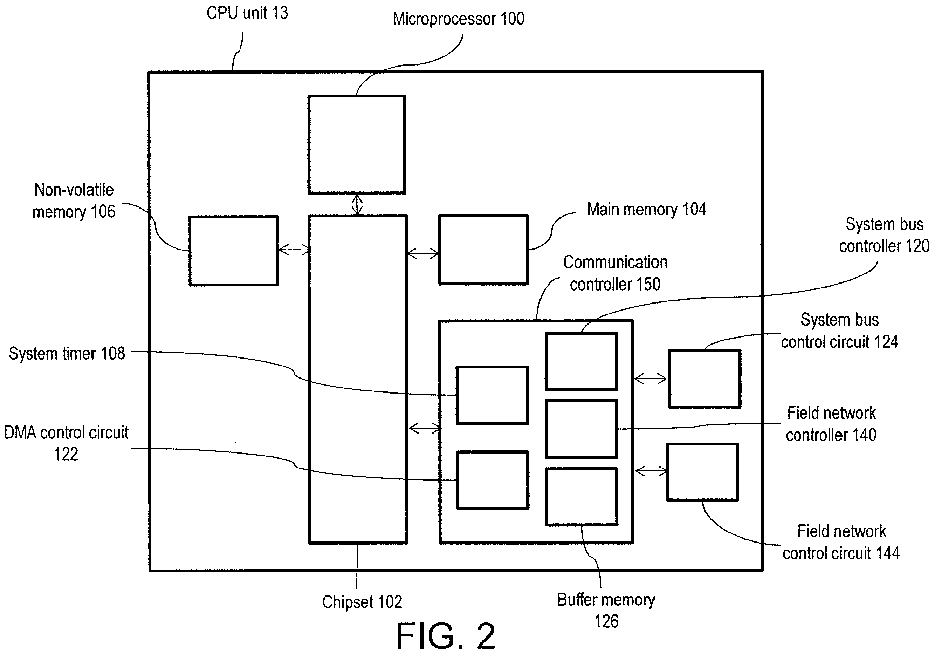

The details of the CPU unit 13 are described in the following with reference to FIG. 2. The IO unit 14 is a unit relating to general input/output processes, and handles input/output of binarized data such as ON/OFF. That is, the IO unit 14 collects information, such as either of a state (ON) in which a sensor, such as the sensor 6, detects a certain target and a state (OFF) in which the sensor does not detect any target. In addition, the IO unit 14 outputs, to an output destination such as the relay 7 or an actuator, one of a command (ON) for activation and a command (OFF) for deactivation.

The special unit 15 has a function that is not supported by the IO unit 14, such as input/output of analog data, temperature control, communication through a special communication means.

The field network 2 transmits various data exchanged with the CPU unit 13. Typically, various industrial Ethernets (registered trademark) can be used as the field network 2. For example, EtherCAT (registered trademark), Profinet IRT, MECHATROLINK (registered trademark)-III, Powerlink, SERCOS (registered trademark)-III, CIP Motion, etc., are known, and any of them may be adopted. In addition, a field network other than an industrial Ethernet may also be adopted. For example, in the case where motion control is not carried out, DeviceNet, CompoNet/IP (registered trademark), etc., may also be used. In a control device system SYS according to the embodiment, typically, a configuration of a case in which EtherCAT (registered trademark) that is an industrial Ethernet (registered trademark) is adopted as the field network 2 is exemplified in the embodiment. It is noted that, "network" in the specification is known as a network that is an abstract concept also including a universal serial bus (USB), a serial port, etc.

It is noted that, by providing the function of the IO unit 14 or the function of the servo motor driver 3 to the CPU unit 13, the control device 1 may also have a configuration in which the CPU unit 13 controls a control target directly without going through the IO unit 14 or the servo motor driver 3, etc., to an extent that such built-in functions can cover.

The servo motor driver 3 is connected with the CPU unit 13 via the field network 2 and drives the servo motor 4 in accordance with a command value from the CPU unit 13. More specifically, the servo motor driver 3 receives a command value, such as a position command value, a velocity command value, a torque command value, in a predetermined cycle from the control device 1. In addition, from a detector, such as a position sensor (rotary encoder) or a torque sensor connected to a shaft of the servo motor 4, the servo motor driver 3 acquires a measurement value, such as position, speed (typically calculated by a difference between the current position and the previous position), torque, etc., relating to the operation of the servo motor 4. In addition, the servo motor driver 3 sets the command value from the CPU unit 13 as a target value, sets the measurement value as a feedback value, and performs feedback control. That is, the servo motor driver 3 adjusts a current for driving the servo motor 4, so that the measurement value approaches the target value. The servo motor driver 3 may also be referred to as a servo motor amplifier.

Also, although FIG. 1 illustrates an example of a system in which the servo motor 4 and the servo motor driver 3 are combined, a system of another configuration, such as a system in which a pulse motor and a pulse motor driver are combined, may also be adopted.

A remote IO terminal is further connected to the field network 2 of the control device system SYS shown in FIG. 1. Like the IO unit 14, the remote IO terminal basically performs a process relating to a general input/output process. More specifically, the remote IO terminal includes a communication coupler 52 for performing a process relating to data transmission in the field network 2 as well as one or more IO units 53. The units are configured to be able to exchange data with each other via a remote IO terminal bus.

The controller support device 8 will be described in the following.

### <Hardware configuration of the CPU unit>

In the following, the hardware configuration of the CPU unit 13 will be described with reference to FIG. 2. FIG. 2 is a schematic diagram illustrating a software configuration of the CPU unit 13 according to an embodiment of the invention. Referring to FIG. 2, the CPU unit 13 includes a microprocessor 100, a chipset 102, a main memory 104, a non-volatile memory (storage unit) 106, a system timer 108, a communication controller 150, a system bus controller 120, a field network controller 140, and a USB connector (not shown). The chip set 102 and other components are respectively bonded through various buses.

The microprocessor 100 and the chipset 102 are typically configured according to general computer architectures. That is, the microprocessor 102 interprets and executes command codes sequentially supplied from the chipset 102 in accordance with an internal clock. The chipset 102 exchanges internal data with various connected components, and generates command codes required for the microprocessor 100. In addition, the chipset 102 has a function of caching data obtained as a result of execution of the computational process in the microprocessor 100.

The CPU unit 13 has the main memory 104 and the non-volatile memory 106 as a storage means.

The main memory 104 is a volatile storage area (RAM) and holds various programs to be executed by the microprocessor 100 after the power of the CPU unit 13 is turned on. In addition, the main memory 104 may also be used as a working memory when the microprocessor 100 executes various programs. A device such as a dynamic random access memory (DRAM) or a static random access memory (SRAM) is used as such main memory 104.

Meanwhile, the non-volatile memory 106 holds, in a non-volatile manner, a real-time operating system (OS), a scheduler program 212 of the control device 1, a fixed cycle program 230, and an information processing program 235, as well as data such as system setting parameters. Such programs or data are copied to the main memory 104 as needed to allow access by the microprocessor 100. A semiconductor memory, such as a flash memory, can be used as such non-volatile memory 106. Alternatively, a magnetic recording medium, such as a hard disk drive, or an optical recording medium, such as a digital versatile disk random access memory (DVD-RAM), may be used.

The communication controller 150 is typically configured by using hardware such as FPGA, ASIC, etc., and configured to be able to transmit and receive data with the main memory 104 via the chipset. The communication controller 150 has a memory area used for communication of data with the main memory 104, and performs transfer of data transferred from the main memory to the system bus controller 120 or the field network controller 140 to be described afterwards. In addition, the communication controller 150 issues a command of causing the system bus controller 120 and the field network controller 140 to transmit the data transferred from the main memory with respect to the system bus controller 120 and the field network controller 140.

The communication controller 150 further includes the system timer 108. The system timer 108 generates and provides an interrupt signal to the microprocessor 100 at each predetermined cycle. Although it is typically configured to generate the respective interrupt signals at multiple different cycles in accordance with the hardware specification, the interrupt signals can also be set to generate at arbitrary cycles by using the OS or a basic input/output system (BIOS). By using the interrupt signal generated by the system timer 108, the control operation for each execution cycle to be described afterwards is realized.

The system bus controller 120 and the field network controller 140 are provided as communication circuits. The communication circuits can perform transmission of output data and reception of input data.

In the case where the CPU unit 13 itself is provided with the function of the IO unit or the function of the servo motor driver 3, the transmission of output data and the reception of input data by using the system bus controller 120 are transmission and reception performed inside the CPU unit 13 with the portions handling such functions as communication targets.

The communication controller 150 controls the exchange of data via the control device system bus 11. More specifically, the communication controller 150 includes the system bus controller 120, a dynamic memory access (DMA) control circuit 122, and a buffer memory 126.

The buffer memory 126 functions as a transmission buffer of data (referred to as "output data" in the following) output to other units via the control device system bus 11 and a reception buffer of data (referred to as "input data" in the following) input from other units via the control device system bus 11. It is noted that the output data generated through the computational process by using the microprocessor 100 are originally stored in the main memory 104. In addition, the output data to be transferred to a specific unit are read from the main memory 104 and temporarily held in the buffer memory 126. In addition, the input data transferred from other units are temporarily held in the buffer memory 126 and then moved to the main memory 104.

The DMA control circuit 122 transfers the output data from the main memory 104 to the buffer memory 126 and transfers the input data from the buffer memory 126 to the main memory 104.

The system bus control circuit 124 performs, with other units connected to the control device system bus 11, a process of transmitting the output data of the buffer memory 126 and a process of receiving first input data and storing the first input data in the buffer memory 126. Typically, the system bus control circuit 124 provides a function of a physical layer and a data link layer in the control device system bus 11.

The field network controller 140 controls the exchange of data via the field network 2. That is, the field network controller 140 controls transmission of the output data and reception of the input data in accordance with the standard of the field network 2 that is used. As described above, the field network 2 in accordance with the standard of EtherCAT (registered trademark) is adopted in the embodiment. Therefore, the field network controller 140 including the hardware for performing the typical Ethernet communication is used. According to the standard of EtherCAT (registered trademark), a typical Ethernet (registered trademark) controller which realizes a communication protocol in accordance with the typical Ethernet (registered trademark) standard can be used. However, depending on the type of the industrial Ethernet (registered trademark) adopted as the field network 2, an Ethernet (registered trademark) controller of a special specification corresponding to a communication protocol of a dedicated specification different from the typical communication protocol is used. In addition, in the case where a field network other than the industrial Ethernet (registered trademark) is used, a field network controller dedicated for such standard is used.

The buffer memory 126 functions as a transmission buffer of data (referred to as "output data" in the following) output to another device, etc., via the field network 2 and a reception buffer of data (referred to as "input data" in the following) input from another device, etc., via the field network 2. The output data generated by using the computational process by using the microprocessor 100 are originally stored in the main memory 104. In addition, the output data to be transferred to a specific device are read from the main memory 104 and temporarily held in the communication circuit buffer 146. In addition, the input data transferred from another device are temporarily held in the buffer 146 and then moved to the main memory 104.

The DMA control circuit 122 transfers the output data from the main memory 104 to the buffer and transfers the input data from the buffer to the main memory 104.

The field network control circuit 144, with other devices connected with the field network 2, performs a process of transmitting the output data of the buffer and a process of receiving the input data and storing the input data in the communication circuit buffer. Typically, the field network control circuit 144 provides a function of a physical layer and a data link layer in the field network 2.

A USB connector is an interface for connection between the controller support device 8 and the CPU unit 13. Typically, a program transferred from the controller support device 8 and executable by the microprocessor 100 of the CPU unit 13 is taken into the control device 1 via a USB connector 110.

### <Software configuration of the CPU unit>

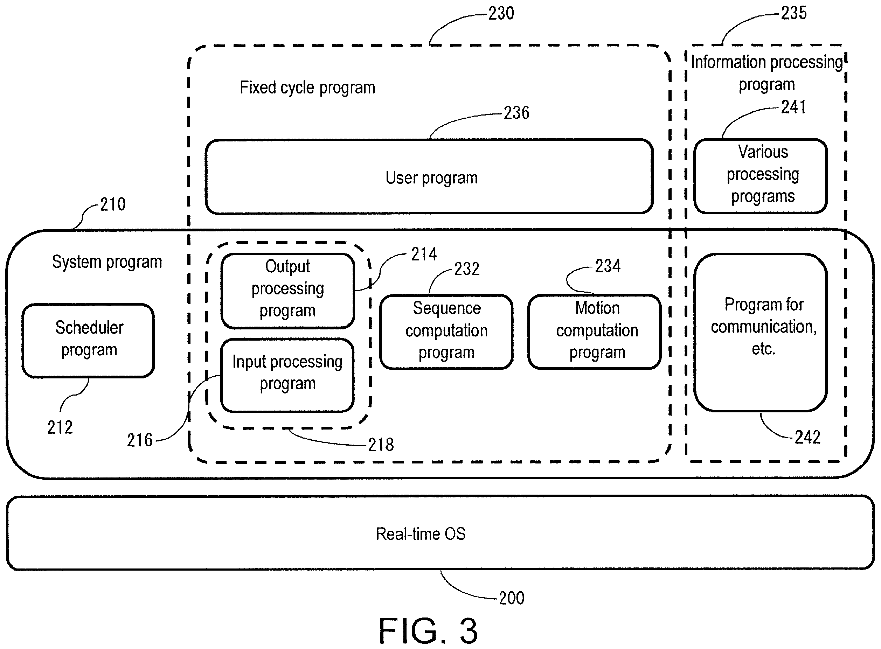

In the following, the software groups for providing the various functions according to the embodiment are described with reference to FIG. 3. The command codes included in the software are read at suitable timings and executed by the microprocessor 100 of the CPU unit 13.

FIG. 3 is a schematic diagram illustrating a software configuration executed by the CPU unit 13 according to an embodiment of the invention. Referring to FIG. 3, the software executed by the CPU unit 13 includes three levels, i.e., a real-time OS 200, a system program 210, and a user program 236 and various processing programs.

The real-time OS 200 is designed in accordance with the computer architecture of the CPU unit 13, and provides a basic running environment for the microprocessor 100 to execute the system program 210 and the user program 236.

The system program 210 is a software group for providing a function as the control device 1. Specifically, the system program 210 includes a scheduler program 212, an output processing program 214, an input processing program 216, a sequence computation program 232, a motion computation program 234, and a program 242 for communication, etc. In general, the output processing program 214 and the input processing program 216 are executed consecutively (integrally). Therefore, these programs may also be generally referred to as an IO processing program 218.

The user program 236 is produced in accordance with a control objective for the user. That is, the user program 236 is a program arbitrarily designed in accordance with the line (process) of an objective controlled by using the control device system.

As will be described in the following, the user program 236 cooperates with the sequence computation program 232 and the motion computation program 234 to realize the control objective for the user. That is, the user program 236 realizes a programmed operation by using the commands, functions, functional modules, etc., provided by the sequence computation program 232 and the motion computation program 234.

A task executed by using the user program 236, the IO processing program 218, the sequence computation program 232, and the motion computation program 234 is a fixed cycle task to be reliably executed in each control cycle. Accordingly, the program executing the fixed cycle task is referred to as a fixed cycle program 230.

The information processing program 235 causes the microprocessor to execute an information processing task with a priority lower than the fixed cycle task. The information processing program 235 includes a program 242 for communication, etc., included in the system program 210 and various processing programs 241.

In the following, each program will be described in greater detail. The user program 236 is produced in accordance with a control objective (e.g., a target line or process) of the user, as described above. The user program 236 is typically in the form of an object program executable by the microprocessor 100 of the CPU unit 13. The user program 236 is generated by compiling a source program written in a ladder language, etc., in the controller support device 8, etc. In addition, the user program 236 generated in the form of an object program is transferred from the controller support device 8 to the CPU unit 13 via the connection cable 10 and stored in the non-volatile memory 106, etc.

The scheduler program 212 controls the start of the processing and the resumption of the processing after the processing is interrupted in each execution cycle for the fixed cycle program 230 and the information processing program 235. The scheduler program 212 causes the microprocessor 100 to execute schedule setting processing for the fixed cycle program 230 and the information processing program 235 executed in the control cycle.

The output processing program 214 reconfigures the output data generated through execution of the user program 236 (fixed cycle program 230) into a form suitable to be transferred to the communication controller. In the case where the system bus controller 120 or the field network controller 140 requires an instruction for executing transmission from the microprocessor 100, the output processing program 214 issues such instruction.

The input processing program 216 reconfigures the input data received through the system bus controller 120 and/or the field network controller 140 into a form suitable to be used by the fixed cycle program 230.

When a sequence command used by the user program 236 is executed, the sequence computation program 232 is called and executed to realize the contents of such command.

The motion computation program 234 is executed in accordance with the instruction from the user program 236, and performs calculation every time a command value output with respect to a motor driver such as the servo motor driver 3 or a pulse motor driver is executed.

The program 242 for communication etc., summarizes and represents the software groups for realizing various functions of the control device 1 in addition to the program as the fixed cycle task. For example, the program 242 is a program causing the microprocessor to execute a process from a request from a control device of the apparatus or an external apparatus or a self-diagnosis process. In addition, a process of transferring the data of the main memory to an external storage medium or a process of reading data from an external storage medium is also included in the program 242 for communication, etc. More specifically, as a process performed by the program 242 for communication, etc., examples may include OPC unified architecture (OPC-UA) communication, remote file access (access to a network attached storage (NAS) etc.), DB input/output, cloud connection/communication, IoT communication such as MQTT, communication among PLCs, and communication among devices (e.g., hyper-wideband enabled RF messaging (HERMES), the standard of Japan Robot Association (JARAS), etc.), etc.

The various processing programs are provided by the user, and are programs performing various information processes of a low real-time property. As an example of the various processing programs, examples include key performance indicator (KPI) calculation and web server processing as well as artificial intelligence (AI) processing, etc.

The real-time OS 200 provides an environment for switching and executing multiple programs over time. In the control device 1 according to the embodiment, as an event (interrupt) for outputting (transmitting) the output data generated through the CPU unit 13 executing a program to another unit or another device, an interrupt of the start of a control cycle is initialized. When the interrupt of the start of the control cycle occurs in the real-time OS 200, the real-time OS 200 switches the execution target in the microprocessor 100 from the program under execution at the time point when the interrupt occurs to the scheduler program 212.

It is noted that, in the above description, as shown in FIG. 2, an embodiment using a single-core processor is described. However, an embodiment using a multi-core processor may also be adopted. For example, an embodiment in which, in the embodiment, a multi-core processor that is not completely separated in terms of hardware may be used, and the fixed cycle task and the information processing task may share the multi-core processor.

### [Embodiment 1]

### <Time chart>

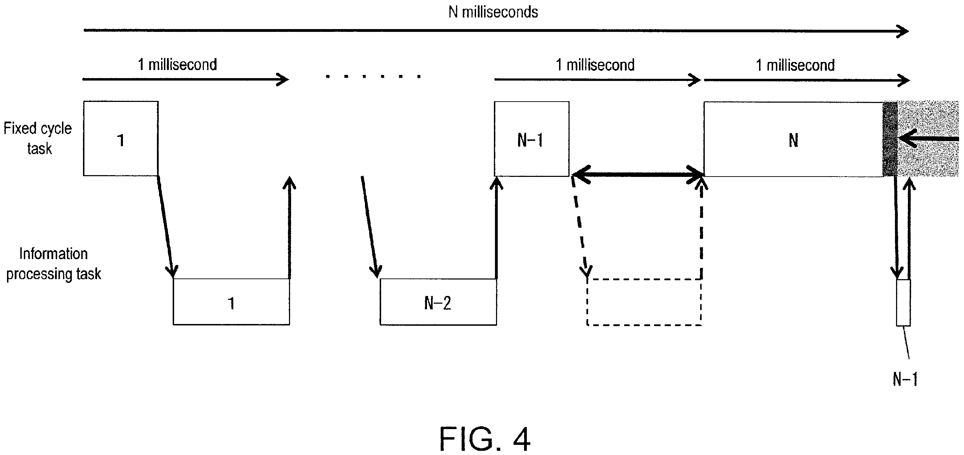

FIG. 4 is a time chart of a process executed in the control device 1 according to Embodiment 1 of the invention. In the control device 1 of Embodiment 1, a fixed cycle task required to be executed in a predetermined control cycle and an information processing task with a priority lower than the fixed cycle task are both executed by the microprocessor. In addition, the scheduler program 212 performs a process of setting an execution schedule of the fixed cycle task and the information processing task. In the embodiment, the scheduler program 212 sets the execution schedule of the fixed cycle task and the information processing task as shown in the following.

The fixed cycle task (1, 2, ..., N) is repetitively executed at a predetermined control cycle (e.g., one millisecond). In addition, the information processing task (1, 2, ..., N-1) is executed during a free time of the control cycle under execution in which the fixed cycle task is not executed.

In the control cycle in which the fixed cycle task (N-1) is executed, the scheduler program 212 estimates the execution time of the fixed cycle task N scheduled to be executed in the next control cycle that is a following control cycle. For example, in the control cycle in which the fixed cycle task (N-1) is executed, the scheduler program 212 estimates the execution time of the fixed cycle task N scheduled to be executed in the next control cycle that is a following control cycle. Then, in accordance with the length of the estimated execution time of the fixed cycle task N, the execution time of the information processing task executed in the control cycle under execution is set. In such case, the scheduler program 212 may also set the execution time of the information processing task executed in the control cycle under execution in a case in which the estimated execution time exceeds a predetermined threshold.
In the embodiment, as shown in FIG. 4, in the case in which the estimated execution time exceeds the predetermined threshold, the scheduler program 212 sets the execution time of the information processing task executed in the control cycle under execution to 0 (stops the execution). In such case, the information processing task (N-1) is not executed in the control cycle under execution, and the execution is carried to the next control cycle.

According to the above process, in the case where it is determined that the estimated execution time of the fixed cycle task in the next control cycle exceeds the threshold, by stopping the execution of the information processing task in the control cycle under execution, the fixed cycle task scheduled to be executed in the next control cycle can be reliably completed in the control cycle. In addition, through a relatively simple determination, i.e., comparing the estimated execution time and the threshold, the execution time of the information processing program 235 executed in the control cycle under execution can be set. Accordingly, the computational load due to the determination can be reduced.

### <Flowchart>

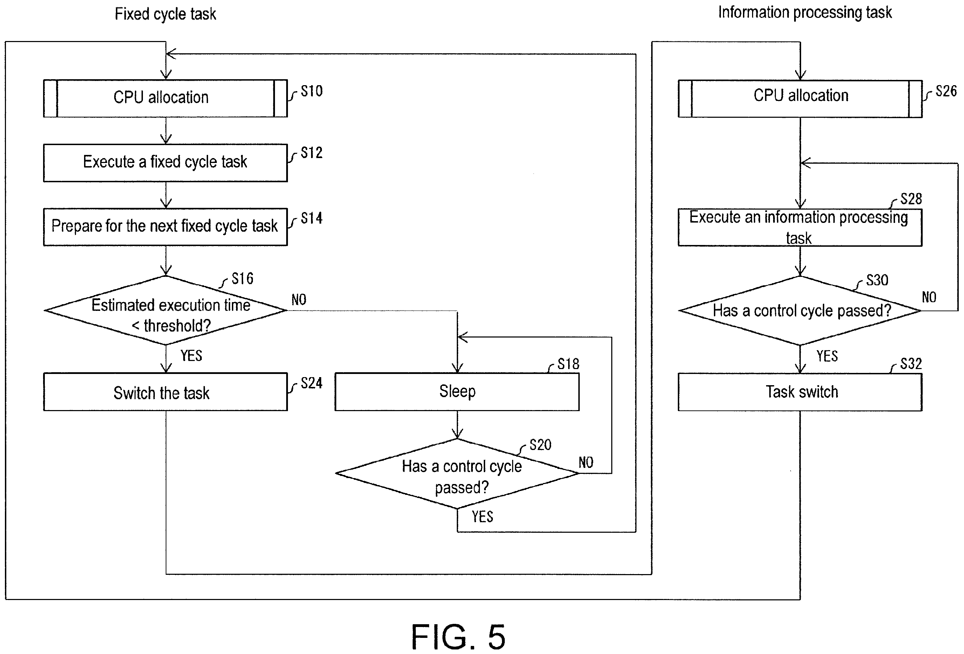

FIG. 5 is a flowchart illustrating a flow of processes of setting a schedule by using the fixed cycle program 230, the information processing program 235, and the scheduler program 212 executed in the control device 1 according to Embodiment 1 of the invention. The respective processes in the following are realized by the microprocessor 100 executing the fixed cycle program 230, the information processing program 235, and the scheduler program 212.

In Step S10, the scheduler program 212 performs assignment to cause the microprocessor 100 to execute the fixed cycle program 230 corresponding to the fixed cycle task (N-1). In the following, such process is described as that the scheduler 212 assigns the CPU to the fixed cycle task (N-1).

In Step S12, the fixed cycle program 230 executes the fixed cycle task (N-1).

In Step S14, during the execution of the fixed cycle task (N-1), the fixed cycle program 230 carries out preparation for the execution of the fixed cycle task N scheduled to be executed in the next control cycle.

In Step S16, the scheduler program 212 estimates the execution time of the fixed cycle task N.

If the estimated execution time of the fixed cycle task N exceeds the predetermined threshold in Step S16, the flow proceeds to Step S18.

In Step S18, the flow enters a sleep state and the information processing task is not executed.

In Step S20, the scheduler program 212 determines whether the control cycle has passed.

In the case where the scheduler program 212 determines that the control cycle has not passed in Step S20, the sleep state continues.

In the case where the scheduler program 212 determines that the control cycle time has passed in Step S20, the flow returns to Step S10, and the processes from Step S10 to Step S16 are repeated for the fixed cycle task N of the next control cycle.

In Step S16, if the estimated execution time of the fixed cycle task N is shorter than or equal to the predetermined threshold, the flow proceeds to Step S24.

In Step S24, the scheduler program 212 performs task switching to the information processing task. Then, the flow proceeds to Step S26.

In Step S26, the scheduler program 212 assigns the CPU to the information processing task.

In Step S28, the information processing program 235 executes the information processing task.

In Step S30, the scheduler program 212 determines whether the control cycle has passed.

The flow returns to Step S28, and the information processing task is executed, until the control cycle is determined as having passed in Step S30. If it is determined that the control cycle has passed, the flow proceeds to Step S32.

In Step S32, task switching to the fixed cycle task is performed.

Then, the flow returns to Step S10, and the fixed cycle task program 230 executes the fixed cycle task N of the next control cycle.

Henceforth, the same processes are repeated.

According to the configuration, in the case where the estimated execution time exceeds the predetermined threshold, the simple control of stopping the execution of the information processing program 235 executed in the control cycle under execution is carried out. Accordingly, it is possible to prevent a situation in which the execution time of the fixed cycle program 230 becomes excessively long and the fixed cycle task is not sufficiently executed in the next control cycle can be prevented. Moreover, the computational load due to the control can be reduced.

### [Embodiment 2]

In the following, another embodiment of the invention is described. It is noted that, for the ease of description, components having the same functions as the components described in the above embodiments are denoted by the same reference numerals, and description thereof will not be repeated.

### <Time chart>

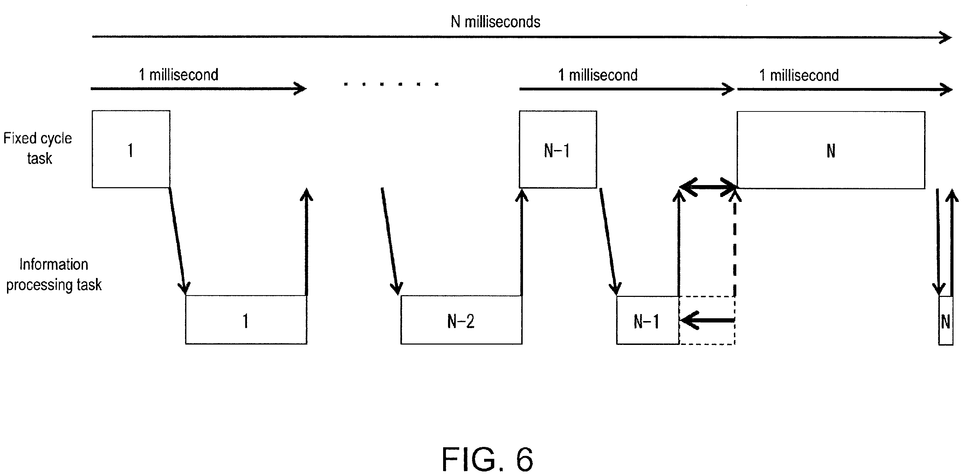

FIG. 6 is a time chart of a process executed in the control device 1 according to Embodiment 2 of the invention. In Embodiment 2 as well, the fixed cycle task (1, 2, ..., N) and the information processing task (1, 2, ..., N-1) are both executed. In addition, the scheduler program 212 sets a schedule for executing the fixed cycle task and the information processing task as described below.

In Embodiment 2, in the control cycle in which the fixed cycle task (N-1) is executed, the scheduler program 212 estimates the execution time of the fixed cycle task N scheduled to be executed in the next control cycle that is a following control cycle, and, in the case where the estimated execution time of the fixed cycle task N exceeds the predetermined threshold, the execution time of the information processing task (N-1) executed in the control cycle under execution is reduced.
As shown in FIG. 6, in the case where the execution time of the fixed cycle task N scheduled to be executed in the next control cycle exceeds the predetermined threshold as well, the execution of the information processing task (N-1) in the control cycle under execution is not completely stopped, but the information processing task (N-1) is executed in an execution time set to be reduced. However, instead of using the time of the entire control cycle, an idle time is provided before the next control cycle starts.

According to the above process, in the case where the estimated execution time of the fixed cycle task in the next control cycle exceeds the predetermined threshold as well, the information processing task is executed by setting a reduced execution time. Accordingly, the free time with respect to the execution time of the fixed cycle task can be further utilized. In addition, by setting a shorter execution time of the fixed cycle task in the control cycle under execution to provide the idle time, the fixed cycle task can be reliably completed in the next control cycle.

### <Flowchart>

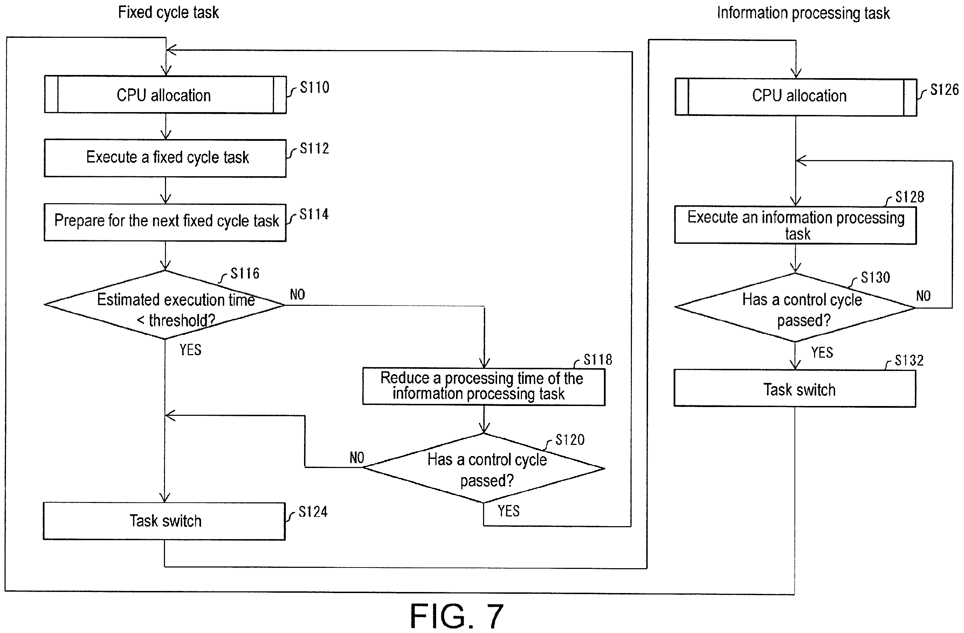

FIG. 7 is a flowchart illustrating a flow of processes executed in the control device 1 according to Embodiment 2 of the invention. In the following, the flow of processes is described with reference to FIG. 7.

In Step S 110, the scheduler program 212 assigns the CPU to the fixed cycle task (N-1).

In Step S112, the fixed cycle program 230 executes the fixed cycle task (N-1).

In Step S1 14, during the execution of the fixed cycle task (N-1), the fixed cycle program 230 carries out preparation for the execution of the fixed cycle task N scheduled to be executed in the next control cycle.

In Step S116, the scheduler program 212 estimates the execution time of the fixed cycle task N.

If the estimated execution time of the fixed cycle task N exceeds the predetermined threshold in Step S116, the flow proceeds to Step S118.

In Step S118, the execution time of the information processing task executed in the control cycle under execution is reduced.
As shown in FIG. 6, in the case where the execution time of the fixed cycle task N scheduled to be executed in the next control cycle exceeds the predetermined threshold as well, the execution of the information processing task (N-1) in the control cycle under execution is not completely stopped, but the information processing task (N-1) is executed in an execution time set to be reduced. However, instead of using the time of the entire control cycle, an idle time is provided before the next control cycle starts.

According to the above process, in the case where the estimated execution time of the fixed cycle task in the next control cycle exceeds the predetermined threshold as well, the information processing task is executed by setting a reduced execution time. Accordingly, the free time with respect to the execution time of the fixed cycle task can be further utilized. In addition, by setting a shorter execution time of the fixed cycle task in the control cycle under execution to provide the idle time, the fixed cycle task can be reliably completed in the next control cycle.

### <Flowchart>

FIG. 7 is a flowchart illustrating a flow of processes executed in the control device 1 according to Embodiment 2 of the invention. In the following, the flow of processes is described with reference to FIG. 7.

In Step S110, the scheduler program 212 assigns the CPU to the fixed cycle task (N-1).

In Step S112, the fixed cycle program 230 executes the fixed cycle task (N-1).

In Step S114, during the execution of the fixed cycle task (N-1), the fixed cycle program 230 carries out preparation for the execution of the fixed cycle task N scheduled to be executed in the next control cycle.

In Step S116, the scheduler program 212 estimates the execution time of the fixed cycle task N.

If the estimated execution time of the fixed cycle task N exceeds the predetermined threshold in Step S116, the flow proceeds to Step S118.

In Step S118, the execution time of the information processing task executed in the control cycle is reduced.
In Step S120, the scheduler program 212 determines whether the control cycle has passed.

In the case where the scheduler program 212 determines that the control cycle has not passed in Step S120, the flow proceeds to Step S124.

In the case where the scheduler program 212 determines that the control cycle has passed in Step S120, the flow returns to Step S110, and the processes from Step S110 to S116 are repeated for the next fixed cycle task.

If the estimated execution time of the fixed cycle task N is shorter than or equal to the predetermined threshold in Step S116, the flow proceeds to Step S124.

In Step S124, the scheduler program 212 performs task switching to the information processing task. Then, the flow proceeds to Step S126.

In Step S126, the scheduler program 212 assigns the CPU to the information processing task.

In Step S128, the information processing program 235 executes the information processing task.

In Step S130, the scheduler program 212 determines whether the control cycle has passed.

The flow returns to Step S128, and the information processing program 235 executes the information processing task, until the control cycle is determined as having passed in Step S130. If it is determined that the control cycle has passed, the flow proceeds to Step S132.

In Step S132, the scheduler program 212 performs task switching to the fixed cycle task.

Then, the flow returns to Step S110, and the fixed cycle task program 230 executes the fixed cycle task of the next control cycle.

Henceforth, the same processes are repeated.

In the process, the execution time of the fixed cycle task of the next control cycle is estimated, and in the case where the estimated execution time exceeds the predetermined threshold, the processing time of the information processing task in the control cycle under execution is reduced. Accordingly, the information processing task can be executed in the control cycle under execution, and the fixed cycle task can be reliably executed in the control cycle.

In addition, the scheduler program 212 may also set the execution time of the information processing task executed in the control cycle under execution in accordance with the type of the information processing task executed in the control cycle under execution.
For example, in the fixed cycle task, there may be a task in which an external device (e.g., IP communication of a memory card or a tag data link, etc.) is used. Since the external device is out of the control of the CPU, in the case where the information processing task is a task that uses such external device, the information processing task not only affects CPU resources, but also affects the execution of the fixed cycle task due to a conflict of the external device. For example, in the case where variable synchronization with another PLC, which uses the tag data link function, is carried out in the fixed cycle task, if the information processing task occupies the network bandwidth due to cloud communication, etc., the variable synchronization through tag data link in the fixed cycle task may fail. Accordingly, by changing the execution time in accordance with the type of the information processing task, the conflict of the external device (resources other than the CPU) can be avoided.

Although the execution time of the information processing task is set in accordance with the type of the information processing task in the above example, it may also be that the scheduler program 212 sets the threshold in accordance with the type of the information processing task executed in the control cycle under execution.
That is, according to the above processes, in the case where the estimated execution time of the fixed cycle task exceeds the predetermined threshold as well, in accordance with the type of the information processing task executed at the same time, an appropriate threshold or the execution time of the information processing task can be set. Accordingly, the fixed cycle task can be completed in the control cycle, and the free time in which the fixed cycle task is not performed can be effectively utilized.

### [Embodiment 3]

In the following, another embodiment of the invention is described. It is noted that, for the ease of description, components having the same functions as the components described in the above embodiments are denoted by the same reference numerals, and description thereof will not be repeated.

### <Time chart>

In Embodiments 1 and 2, the case where one fixed cycle task is executed is described. However, the invention is not limited thereto, the case where multiple fixed cycle tasks are executed is also applicable. That is, there are multiple fixed cycle programs 230 executed as the fixed cycle tasks, and the scheduler program 212 may estimate the estimated execution time in the next control cycle for each of the fixed cycle programs 230 and calculate a total time, and, in accordance with the length of the total time, set the execution time of the information processing program 235 executed in the control cycle under execution.

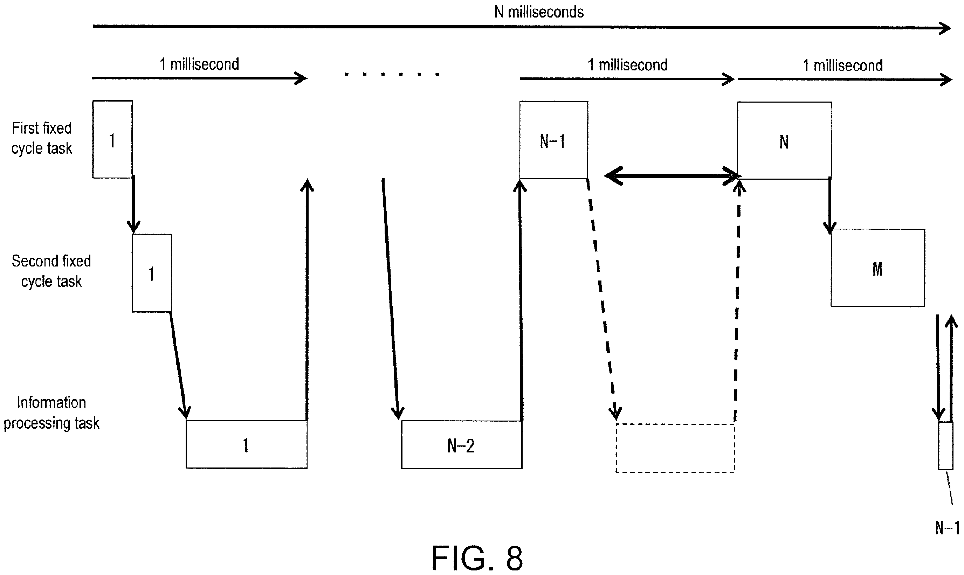

FIG. 8 is a time chart of a process executed in the control device 1 according to Embodiment 3 of the invention. In Embodiment 3, the first fixed cycle task (1, 2, ..., N) and the second fixed cycle task (1, 2, ..., N) are executed in the same predetermined control cycle. In addition, an information processing task (1, 2, ..., N-1) more sophisticated than the fixed cycle tasks is also executed. In addition, the scheduler program 212 sets a schedule for executing the first fixed cycle task, the second fixed cycle task, and the information processing task as described below.

In Embodiment 3, the scheduler program 212 may estimate the estimated execution time in the next control cycle for each of the fixed cycle programs 230 and calculate the total time, and, in accordance with the length of the total time, set the execution time of the information processing program 235 executed in the control cycle under execution.
For example, as shown in FIG. 8, during execution of the first fixed cycle task (N-1), the execution time of the first fixed cycle task N scheduled to be executed in the next control cycle is estimated. In addition, during execution of the second fixed cycle task (N-1), the execution time of the second fixed cycle task N scheduled to be executed in the next control cycle is estimated. In addition, a threshold with respect to the total value of the estimated execution times of the first fixed cycle task and the second fixed cycle task is set. In Embodiment 3, in the case where the total value of the estimated execution times of the first fixed cycle task and the second fixed cycle task exceeds the threshold, the execution of the information processing task (N-1) is stopped in the control cycle under execution. In addition, the execution of the information processing task (N-1) is carried to the next control cycle.

According to the above process, in the case where the estimated execution time of the fixed cycle tasks in the next control cycle exceeds the predetermined threshold as well, by stopping the execution of the information processing task in the control cycle under execution, the fixed cycle task scheduled to be executed in the next control cycle can be reliably completed in the control cycle. In addition, through a relatively simple determination, i.e., comparing the estimated execution time and the threshold, the execution time of the information processing program executed in the control cycle under execution can be set. Accordingly, the computational load due to the determination can be reduced.

In Embodiment 3, the case with two fixed cycle tasks is described as an example. However, the number of the fixed cycle tasks is not limited thereto, and there may be three or more fixed cycle tasks.

Even if there are multiple fixed cycle tasks, the information processing task can be executed on a best-effort basis in the gap time during execution of the fixed cycle tasks.

### <Flowchart>

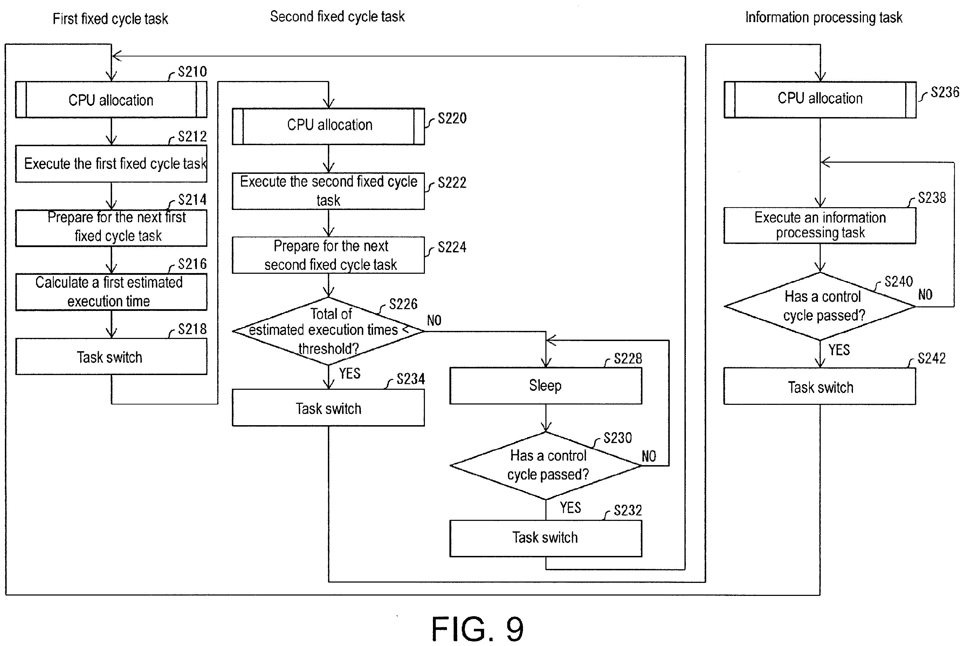

FIG. 9 is a flowchart illustrating a flow of processes executed in the control device 1 according to Embodiment 3 of the invention. In the following, the flow of processes is described with reference to FIG. 9.

In Step S210, the scheduler program 212 assigns the CPU to the first fixed cycle task (N-1).

In Step S212, the fixed cycle program 230 executes the first fixed cycle task (N-1).

In Step S214, during execution of the first fixed cycle task (N-1), the fixed cycle program 230 carries out preparation for the execution of the first fixed cycle task N scheduled to be executed in the next control cycle.

In Step S216, the scheduler program 212 estimates an execution time (T1) of the first fixed cycle task N.

In Step S218, the scheduler program 212 performs task switching to the second fixed cycle task (N-1).

In Step S220, the scheduler program 212 assigns the CPU to the second fixed cycle task (N-1).

In Step S222, the fixed cycle program 230 executes the second fixed cycle task (N-1).

In Step S224, during the execution of the second fixed cycle task (N-1), the fixed cycle program 230 carries out preparation for the execution of the second fixed cycle task N scheduled to be executed in the next control cycle.

In Step S226, the scheduler program 212 estimates an execution time (T2) of the second fixed cycle task N. In addition, the scheduler program 212 calculates the total of the execution time (T1) of the first fixed cycle task N estimated in Step S216 and the execution time (T2) of the second fixed cycle task N, and determines whether the total exceeds the predetermined threshold.

In the case where the estimated execution time exceeds the predetermined threshold in Step S226, the flow proceeds to Step S228.

In Step S228, the flow enters the sleep state and the information processing task is not executed.

In Step S230, the scheduler program 212 determines whether the control cycle has passed.

In the case where the scheduler program 212 determines that the control cycle has not passed in Step S230, the sleep state continues until the control cycle has passed.

In the case where the scheduler program 212 determines that the control cycle has passed in Step S230, the flow proceeds to Step S232 to perform task switching.

Then, the flow returns to Step S210, and the processes from Step S210 to S232 are repeated.

In the case where the estimated execution time is shorter than or equal to the predetermined threshold in Step S226, the flow proceeds to Step S234.

In Step S234, task switching to the information processing task is performed. Then, the flow proceeds to Step S236.

In Step S236, the scheduler program 212 assigns the CPU to the information processing task.

In Step S238, the information processing program 235 executes the information processing task.

In Step S240, the scheduler program 212 determines whether the control cycle has passed.

The flow returns to Step S238, and the information processing program 235 executes the information processing task, until the scheduler program 212 determines the control cycle as having passed in Step S240. If it is determined that the control cycle has passed, the flow proceeds to Step S242.

In Step S242, the scheduler program 212 performs task switching to the fixed cycle task.

Then, the flow returns to Step S210, and the fixed cycle task program 230 executes the fixed cycle task N of the next control cycle.

Henceforth, the same processes are repeated.

According to the configuration, even in the case where multiple fixed cycle programs are executed in the control cycle, it is possible to prevent a situation in which the execution time of the fixed cycle program becomes excessively long and the fixed cycle task is not sufficiently executed in the next control cycle.

### [Embodiment 4]

In the following, another embodiment of the invention is described. It is noted that, for the ease of description, components having the same functions as the components described in the above embodiments are denoted by the same reference numerals, and description thereof will not be repeated.

### <Time chart>

In Embodiment 3, the following is described as an example: in the case where multiple fixed cycle tasks are executed together with the information processing task, if the total value of the execution times of the fixed cycle tasks respectively scheduled to be executed in the next control cycle exceeds the predetermined threshold, the execution of the information processing task is stopped in the control cycle under execution. However, the invention is not limited thereto. It may also be that the execution time of the information processing task in the control cycle under execution is set in accordance with the total value of the execution times of the fixed cycle tasks respectively scheduled to be executed in the next control cycle.

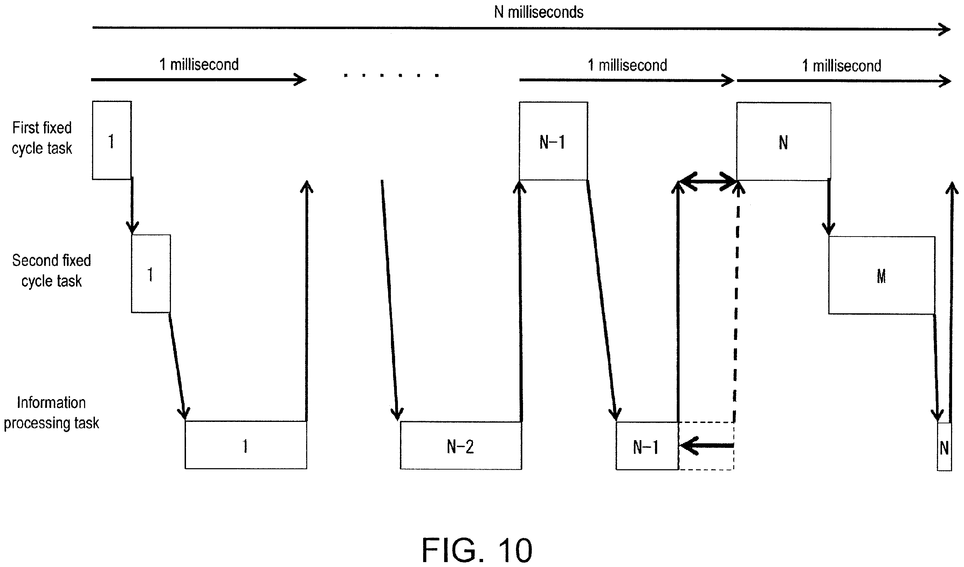

FIG. 10 is a time chart of a process executed in the control device 1 according to Embodiment 4 of the invention. For example, in Embodiment 4, the first fixed cycle task (1, 2, ..., N) and the second fixed cycle task (1, 2, ..., N) are executed in the same predetermined control cycle. In addition, an information processing task (1, 2, ..., N-1) more sophisticated than the fixed cycle tasks is also executed. In addition, the scheduler program 212 sets a schedule for executing the first fixed cycle task, the second fixed cycle task, and the information processing task as described below.

In Embodiment 3, the scheduler program 212 may estimate the estimated execution time in the next control cycle for each of the fixed cycle programs and calculate the total time, and, in accordance with the length of the total time, set the execution time of the information processing program executed in the control cycle under execution.
For example, as shown in FIG. 10, during execution of the first fixed cycle task (N-1), the execution time of the first fixed cycle task N scheduled to be executed in the next control cycle is estimated. In addition, during execution of the second fixed cycle task (N-1), the execution time of the second fixed cycle task N scheduled to be executed in the next control cycle is estimated. In addition, the scheduler program 212 sets a threshold with respect to the total value of the estimated execution times of the first fixed cycle task and the second fixed cycle task. In addition, the scheduler program 212 determines whether the estimated execution times of the first fixed cycle task and the second fixed cycle task exceed the threshold. In Embodiment 4, in the case where the total value of the estimated execution times of the first fixed cycle task and the second fixed cycle task exceeds the threshold, the execution time of the information processing task (N-1) is set to be reduced in the control cycle under execution.

According to the above process, even when there are multiple fixed cycle tasks to be executed, in the case where the total value of the estimated execution times of the fixed cycle tasks in the next control cycle exceeds the predetermined threshold, the information processing task is executed by setting a reduced execution time. Accordingly, the free time with respect to the execution times of the fixed cycle tasks can be further utilized. In addition, by setting a shorter execution time of the fixed cycle task in the control cycle under execution to provide the idle time, the fixed cycle task can be reliably completed in the next control cycle.

### <Flowchart>

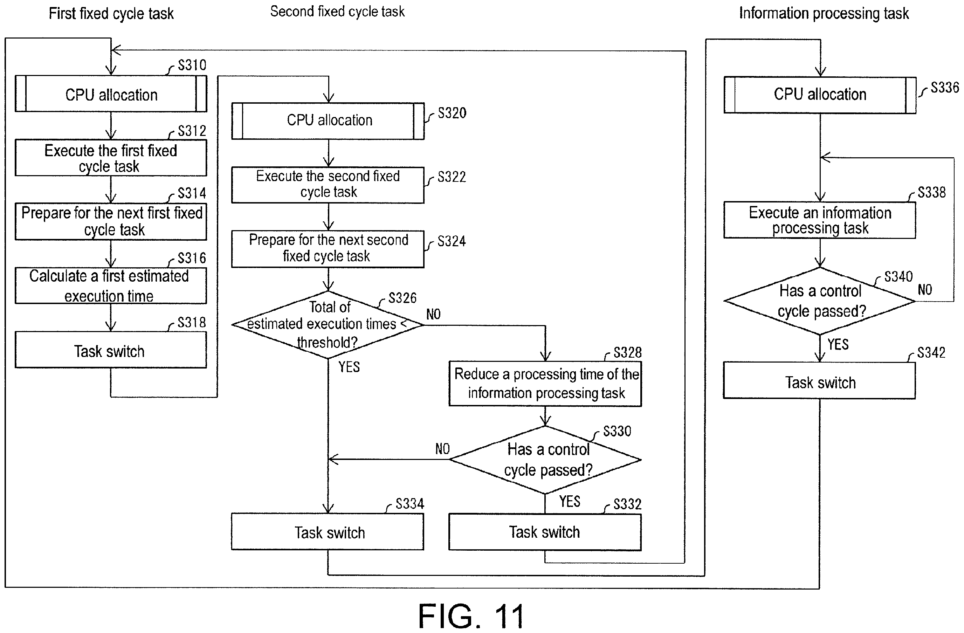

FIG. 11 is a flowchart illustrating a flow of processes executed in the control device 1 according to Embodiment 4 of the invention. In the following, the flow of processes is described with reference to FIG. 9.

In the flowchart shown in FIG. 11, Steps S328 and S330 are different from Step S228 and S230 in the flowchart shown in FIG. 9. However, Steps S310 to Step S326 and Step S332 to S342 in the flowchart of FIG. 11 are the same as Step S210 to S226 and Step S232 to S242 in the flowchart of FIG. 9.

Accordingly, in the following, only Step S326 and S328 are described. In Step S328, the scheduler program 212 reduces the execution time of the information processing task.

In Step S330, the scheduler program 212 determines that the execution of the fixed cycle tasks in the control cycle under execution has ended.

In the case where the scheduler program 212 determines that the execution of the fixed cycle tasks has ended in Step S330, the flow proceeds to Step S334.

According to the configuration, in the case of executing multiple fixed cycle tasks, if the execution times of the first and second fixed cycle tasks scheduled to be carried out in the next control cycle are estimated and the total time is calculated, and the total time exceeds the predetermined threshold, the processing time of the information processing task is reduced. Thus, the information processing task can be effectively carried out in the gap time in which the fixed cycle tasks are not carried out in the control cycle under execution, and the fixed cycle tasks can be reliably completed within the control cycle.

As for the scheduler program 212, an embodiment may be adopted in which a hypervisor serves as the scheduler program and assigns computational resources to the OS for the fixed cycle tasks and the OS for the information processing task.

### [Summary]

In order to solve the above issues, an aspect of the invention provides a control device for controlling a control target apparatus connected via a network. The control device includes: a microprocessor and a storage unit. The storage unit includes: a fixed cycle program, causing the microprocessor to execute a fixed cycle task required to be executed in a predetermined control cycle; an information processing program, causing the microprocessor to execute an information processing task with a priority lower than the fixed cycle task; and a scheduler program, causing the microprocessor to execute a schedule setting process of the fixed cycle program and the information processing program executed in the control cycle. The scheduler program estimates an execution time of the fixed cycle program scheduled to be executed in a next control cycle, which is a following control cycle, in the control cycle under execution, which is the control cycle in which the predetermined fixed cycle program is executed, and sets the execution time of the information processing program executed in the control cycle under execution in accordance with a length of an estimated execution time as an estimation result.

According to the configuration, firstly, the execution time of the fixed cycle program scheduled to be executed in the next control cycle is estimated. In addition, in accordance with the length of the estimated execution time, the execution time of the information processing program to be executed in the control cycle under execution is set. Accordingly, it is possible to prevent a situation in which the execution time of the fixed cycle program becomes excessively long and the fixed cycle task is not sufficiently executed in the next control cycle.

According to an aspect of the invention, in the control device, in a case where the estimated execution time exceeds a predetermined threshold, the scheduler program may set the execution time of the information processing program executed in the control cycle under execution.
According to the configuration, through a relatively simple determination, i.e., comparing the estimated execution time and the threshold, the execution time of the information processing program executed in the control cycle under execution can be set. Accordingly, the computational load due to the determination can be reduced.

According to an aspect of the invention, in the control device, in a case where the estimated execution time exceeds a predetermined threshold, the scheduler program may stop execution of the information processing program executed in the control cycle under execution. According to the configuration, in the case where the estimated execution time exceeds the predetermined threshold, the simple control of stopping the execution of the information processing program executed in the control cycle under execution is carried out. Accordingly, the computational load due to the control can be reduced.

According to an aspect of the invention, in the control device, in a case where the estimated execution time exceeds a predetermined threshold, the scheduler program may reduce the execution time of the information processing program executed in the control cycle under execution.
According to the configuration, in the case where the estimated execution time exceeds the predetermined threshold, the execution time of the information processing program executed in the control period under execution is reduced. Accordingly, compared with the control that stops the execution of the information processing program executed in the control cycle under execution, it is possible to execute the information processing program to a certain extent. Accordingly, the execution of the information processing task can be completed earlier.

According to an aspect of the invention, in the control device, the scheduler program may set the execution time of the information processing program executed in the control cycle under execution in accordance with a type of the information processing program executed in the control cycle under execution.
According to the configuration, the influences on the execution time of the fixed cycle program scheduled to be executed in the next control cycle may differ in accordance with the types of the information processing program. Against this, according to the configuration, since the execution time of the information processing program executed in the control cycle under execution is set in accordance with the type of the information processing program executed in the control cycle under execution, the execution time of the information processing program executed in the control cycle under execution can be set appropriately.

According to an aspect of the invention, in the control device, the scheduler program may set the threshold in accordance with a type of the information processing program executed in the control cycle under execution.

According to the configuration, the influences on the execution time of the fixed cycle program scheduled to be executed in the next control cycle may differ in accordance with the types of the information processing program. Against this, according to the configuration, since the threshold is set in accordance with the type of the information processing program executed in the control cycle under execution, the execution time of the information processing program executed in the control cycle under execution can be set appropriately.

In addition, according to an aspect of the invention, in the control device, a plurality of fixed cycle programs executed as the fixed cycle tasks may be provided. The scheduler program, for each of the fixed cycle programs, may estimate the estimated execution time in the next control cycle and calculates a total time, and, in accordance with a length of the total time, set the execution time of the information processing program executed in the control cycle under execution.
According to the configuration, even in the case where multiple fixed cycle programs are executed in the control cycle, it is possible to prevent a situation in which the execution time of the fixed cycle program becomes excessively long and the fixed cycle task is not sufficiently executed in the next control cycle.

In order to solve the above issues, an aspect of the invention provides a control method of a control device for controlling a control target apparatus connected via a network. The control method includes: a fixed cycle program execution step of causing a microprocessor to execute a fixed cycle task required to be executed in a predetermined control cycle; an information processing program execution step of causing the microprocessor to execute an information processing task with a priority lower than the fixed cycle task; and a scheduler program execution step of causing the microprocessor to execute a schedule setting process of the fixed cycle program and the information processing program executed in the control cycle. In the scheduler program execution step, an execution time of the fixed cycle program scheduled to be executed in a next control cycle, which is a following control cycle, is estimated in the control cycle under execution, which is the control cycle in which the predetermined fixed cycle program is executed, and the execution time of the information processing program executed in the control cycle under execution is set in accordance with a length of an estimated execution time as an estimation result.
According to the configuration, effects same as those of the control device can be achieved.

In order to solve the above issues, an aspect of the invention provides a control program. The control program is a control program causing a computer to function as the control device, and the control program includes the scheduler program.
According to the configuration, effects same as those of the control device can be achieved.

The invention is not limited to the above-described embodiments, and various modifications are possible within the scope indicated in the claims. Embodiments obtained by appropriately combining technical means disclosed in different embodiments are also included in the technical scope of the invention.

### [Reference Sign List]

1: Control device;
100: Microprocessor;
106: Non-volatile memory (storage unit);
212: Scheduler program;
230: fixed cycle program;
235: Information processing program.

## Claims

1. A control device for controlling a control target apparatus connected via a network, the control device comprising:
a microprocessor; and
a storage unit,
wherein the storage unit stores:
a fixed cycle program, causing the microprocessor to execute a fixed cycle task required to be executed in a predetermined control cycle;
an information processing program, causing the microprocessor to execute an information processing task with a priority lower than the fixed cycle task; and
a scheduler program, causing the microprocessor to execute a schedule setting process of the fixed cycle program and the information processing program executed in the control cycle,
wherein the scheduler program estimates an execution time of the fixed cycle program scheduled to be executed in a next control cycle, which is a following control cycle, in the control cycle under execution, which is the control cycle in which the predetermined fixed cycle program is executed, and sets the execution time of the information processing program executed in the control cycle under execution in accordance with a length of an estimated execution time as an estimation result.

2. The control device as claimed in claim 1, wherein, in a case where the estimated execution time exceeds a predetermined threshold, the scheduler program sets the execution time of the information processing program executed in the control cycle under execution.

3. The control device as claimed in claim 2, wherein, in a case where the estimated execution time exceeds a predetermined threshold, the scheduler program stops execution of the information processing program executed in the control cycle under execution.

4. The control device as claimed in claim 2, wherein, in a case where the estimated execution time exceeds a predetermined threshold, the scheduler program reduces the execution time of the information processing program executed in the control cycle under execution.

5. The control device as claimed in any one of claims 1 to 4, wherein the scheduler program sets the execution time of the information processing program executed in the control cycle under execution in accordance with a type of the information processing program executed in the control cycle under execution.

6. The control device as claimed in any one of claims 2 to 4, wherein the scheduler program sets the threshold in accordance with a type of the information processing program executed in the control cycle under execution.

7. The control device as claimed in any one of claims 1 to 6, wherein a plurality of fixed cycle programs executed as the fixed cycle tasks are provided, and
the scheduler program, for each of the fixed cycle programs, estimates the estimated execution time in the next control cycle and calculates a total time, and, in accordance with a length of the total time, sets the execution time of the information processing program executed in the control cycle under execution.

8. A control method of a control device for controlling a control target apparatus connected via a network, the control method comprising:
a fixed cycle program execution step of causing a microprocessor to execute a fixed cycle task required to be executed in a predetermined control cycle;
an information processing program execution step of causing the microprocessor to execute an information processing task with a priority lower than the fixed cycle task; and
a scheduler program execution step of causing the microprocessor to execute a schedule setting process of the fixed cycle program and the information processing program executed in the control cycle,
wherein in the scheduler program execution step, an execution time of the fixed cycle program scheduled to be executed in a next control cycle, which is a following control cycle, is estimated in the control cycle under execution, which is the control cycle in which the predetermined fixed cycle program is executed, and the execution time of the information processing program executed in the control cycle under execution is set in accordance with a length of an estimated execution time as an estimation result.

9. A control program that is a control program causing a computer to function as the control device as claimed in any one of claims 1 to 7, wherein the control program comprises the scheduler program.
